Europäisches Patentamt

European Patent Office

Office européen des brevets

(11) Veröffentlichungsnummer: **0 367 082**
**A2**

# EUROPÄISCHE PATENTANMELDUNG

(21) Anmeldenummer: **89119793.1**

(22) Anmeldetag: **25.10.89**

(51) Int. Cl.5: **B62B 1/12**

(30) Priorität: **29.10.88 DE 8813597 U**

(43) Veröffentlichungstag der Anmeldung:
**09.05.90 Patentblatt 90/19**

(84) Benannte Vertragsstaaten:
**AT BE CH DE ES FR GB IT LI LU NL SE**

(71) Anmelder: **JOHANN BREITENSTEIN GMBH**
**Dechant-Sprünken-Strasse 50-54**
**D-4240 Emmerich(DE)**

(72) Erfinder: **Neijenhuis, Jozeph**
**Groenestraat 10 b**
**NL-7041 ZZ 's Heerenberg(NL)**

(74) Vertreter: **Sparing - Röhl - Henseler**
**Patentanwälte**
**Rethelstrasse 123 Postfach 14 02 68**
**D-4000 Düsseldorf 1(DE)**

(54) **Faltgestell.**

(57) Faltgestell mit einer Tragplatte, an der ein Scherenbein angelenkt ist, während das Ende eines zweiten Scherenbeins in einer Geradführung läuft. Entfalten erfolgt durch Anheben der Tragplatte, Entriegeln erfolgt durch Aufsetzen des zweiten Scherenbeins.

Fig. 1

EP 0 367 082 A2

## Faltgestell

Die Erfindung betrifft ein Faltgestell, insbesondere für größere, jedoch gleichwohl von Hand zu bewegende Lasten, wie einen Werkzeugkoffer, einen Grill oder dergleichen. Das Faltgestell dient dazu, im entfalteten Zustand die Last auf bequemer Höhe abzustützen, während die Einfaltstellung den raumsparenden Transport oder raumsparende Unterbringung ermöglicht.

Scherengestelle mit Rasteinrichtung sind an sich bekannt, etwa für Bügelbretter. Die bekannten Faltgestelle weisen ein manuell betätigbares Organ, etwa einen Druckknopf, auf, bei dessen Betätigung in der Ausfaltstellung deren Rastung gelöst wird. Bei größeren Lasten ist diese Lösung jedoch ungünstig, da gleichzeitig das Gestell noch manuell gehalten werden muß, damit es nicht unkontrolliert kollabiert.

Aufgabe der Erfindung ist es, ein Faltgestell mit bequemerer Bedienbarkeit zu schaffen. Diese Aufgabe wird durch die im Patentanspruch 1 genannten Merkmale gelöst; die Unteransprüche definieren bevorzugte Ausgestaltungen dieses Konzepts.

Die beigefügten Zeichnungen dienen der Erläuterung eines Ausführungsbeispiels und seiner Abwandlungen.

Fig. 1 zeigt in Seitenansicht, weitgehend schematisiert, einen Transportbehälter mit einem Faltgestell gemäß der Erfindung,

Fig. 2 zeigt in Teilseitenansicht ein Detail,

Fig. 3 zeigt in Ansicht von unten eine Abwandlung, und

Fig. 4 zeigt in Teilseitenansicht eine weitere Abwandlung.

Der Transportbehälter, hier ein Werkzeugkasten 1, ist auf seiner Unterseite mit zwei zueinander parallelen Horizontalträgern 2 versehen, die beispielsweise von einer Bodenplatte 15 abgewinkelt sein können. Ein erstes Scherenbein 3 ist bei 4 an den Horizontalträgern angelenkt. Sein bodenseitiges Ende trägt ein Paar von Rollen 5, sein anderes Ende ragt über den Anlenkpunkt hinaus und läuft in einen Griff aus. Das zweite Scherenbein 6 ist bei 7 an das erste angelenkt und mit einem Zapfen 8 in einem Schlitz 9 geführt, der in dem Horizontalträger von einem äußeren Ende 10 aus horizontal verläuft und am inneren Ende in ein vertikal aufwärts gerichtetes Langloch 11 ausläuft.

Der Transportbehälter ist mit einem Tragegriff 12 versehen. Wird er an dem Griff angehoben, so fällt der Zapfen 8 zunächst an das untere Ende des Langlochs. Stützt man jetzt das zweite Scherenbein auf, so gleitet der Zapfen 8 längs dem horizontalen Abschnitt des Führungsschlitzes 9 bis an dessen äußeres Ende, und das Scherengestell faltet sich ein. Stützt man jedoch den Behälter auf die Rollen 5, so wird der Zapfen 8 nach oben in seine Raststellung gebracht.

Die eingefaltete Position des Scherengestells kann durch ein zweites Rastelement, schematisch bei 13 angedeutet, gesichert werden, das manuell auslösbar ist.

Das Scherengestell ist symmetrisch bezüglich der vertikalen Mittelebene, in der der Tragegriff 12 sich erstreckt, aufgebaut, das heißt, auf beiden Seiten des Behälters sind erste und zweite Scherenbeine spiegelsymmetrisch vorgesehen. Vorzugsweise sind diese Beinpaare durch Querstreben miteinander verbunden, wobei eine der Querstreben den den Griff 14 bildet, an dem der Behälter bei ausgeklapptem und eingerasteten Scherengestell angehoben und rollend geschleppt werden kann.

Die ersten Scherenbeine liegen außerhalb, die zweiten innerhalb der Horizontalträger 2. Das zweite Scherenbeinpaar ist so bemessen, daß es gerade unter der Kastenboden paßt. Die die beiden Beinpaare verbindenden Gelenkzapfen 7 werden bei eingefaltetem Scherengestell von Einschnitten 16 der Horizontalträger aufgenommen.

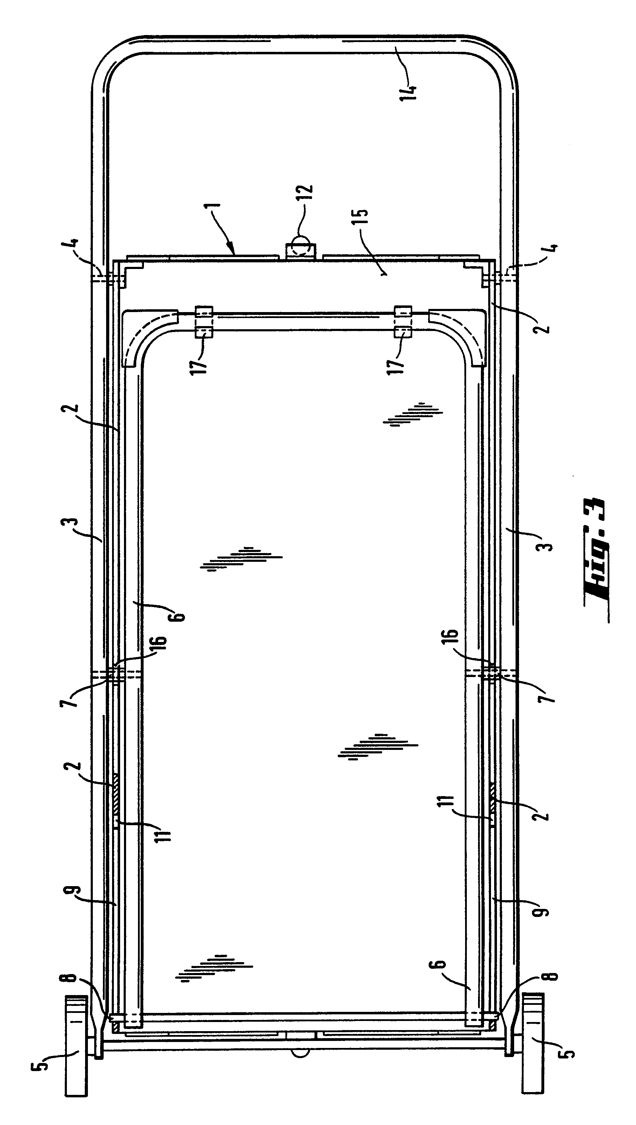

Fig. 2 zeigt eine Sicherungseinrichtung für den Zapfen 8. Eine Schelle 18 mit einem Einschnitt 19 ist bei 20 frei drehbar aufgehangen und greift hakenartig über den Zapfen 8. Ein angepunkteter Winkel 21 ermöglicht das Abheben der Schelle zwecks Entsicherung vor dem Einfaltvorgang; beim Auffalten weicht die Schelle aus und wird dann manuell in die Sicherungsstellung gelegt.

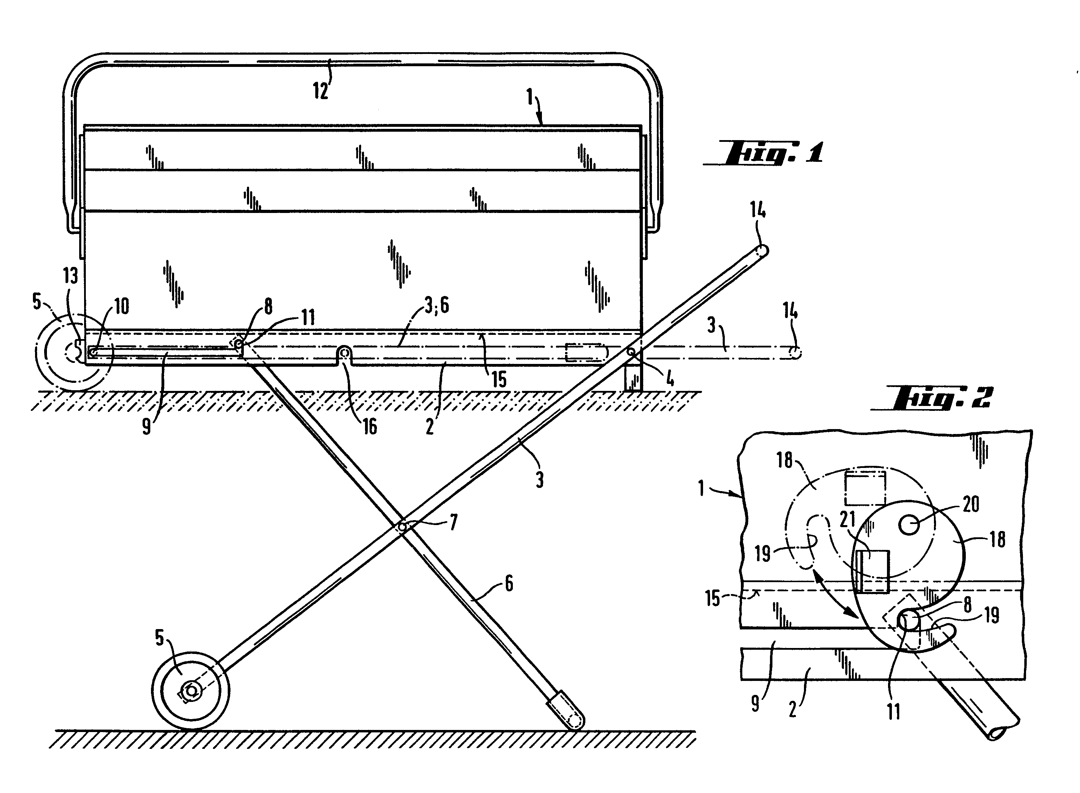

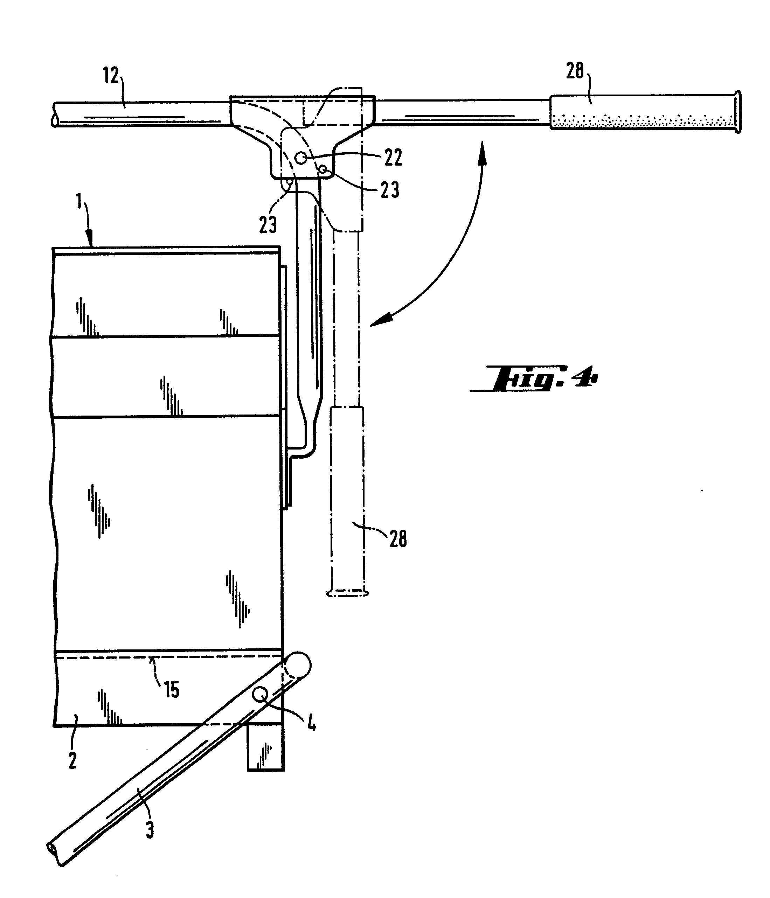

Die in Fig. 1 dargestellt Raste 13 ist insofern ungünstig, als Fertigungsungenauigkeiten bei den Scherenbeinen dazu führen können, daß sie versagt. Günstiger ist die Raste 17, die man in Fig. 3 erkennt.

Im eingefalteten Zustand ragt der Griff 14 ziemlich weit über den Kasten 1 hinaus, was für den Transport mehr Raum als nötig beansprucht. Günstiger ist die Gestaltung nach Fig. 4, bei der das Scherenbein 3 nur wenig über sein Gelenk 4 hinausragt und als Griff ungeeignet ist. Dafür ist am Traggriff 12 ein Klappgriff 28 bei 22 angelenkt, der aus der dargestellten Arbeitsposition nach unten abklappbar ist. Ein durch das Loch 23 gesteckter Stift kann den Griff in beiden Stellungen arretieren. Dieser Griff ist auch besser zum Ziehen oder Schieben des Gestells geeignet als der Griff 14.

## Ansprüche

1. Faltgestell, umfassend eine im entfalteten Zustand beim Stand auf einem horizontalen Boden im wesentlichen horizontale Platte (15), an der ein bodenseitiges Scherengestell (2, 3, 4, 5, 6, 7, 8) angelenkt ist, das durch Anheben der Platte ausfaltbar, durch Aufsetzen auf das erste Scherenbein (3) in dem entfalteten Zustand einrastbar und durch Aufsetzen auf das zweite Scherenbein (6) ausrastbar ist.

2. Faltgestell nach Anspruch 1, bei dem mit der Platte seitliche, senkrecht zur Scherenachse (7) verlaufende nach unten ragende Leisten (2) verbunden sind, an deren einen Enden das erste Scherenbein (3) angelenkt (bei 4) ist, während ein Ende (8) des zweiten Scherenbeines (6) an den Leisten (2) horizontalgeführt ist.

3. Faltgestell nach Anspruch 2, bei dem die Horizontalführung (9) des zweiten Scherenbeines (6) an ihrem der Ausfaltstellung entsprechenden Ende vertikal aufwärts abgewinkelt endet, und bei dem das geführte Scherenbeinende (8) mit einem Zapfen (8) in die Führung greift und mit ihm in der Ausfaltstellung in dem vertikalen Führungsende (11) einrastet.

4. Faltgestell nach Anspruch 3, bei dem das erste Scherenbein (3) außerhalb, das zweite Scherenbein (6) innerhalb der Leisten (2) angeordnet ist.

5. Faltgestell nach Anspruch 4, bei dem das zweite Scherenbein (6) unter die Platte (15) paßt.

6. Faltgestell nach einem der vorangehenden Ansprüche mit symmetrisch U-förmigen Scherenbeinen (3, 6).

7. Faltgestell nach einem der vorangehenden Ansprüche, bei dem das bodenseitige Ende des ersten Scherenbeines (3) mit Transportrollen (5) versehen ist.

8. Faltgestell nach einem der vorangehenden Ansprüche, bei dem das erste Scherenbein (3) mit einem Griff (14) versehen ist.

9. Faltgestell nach einem der vorangehenden Ansprüche mit einer manuell lösbaren Rasteinrichtung (13, 17) für die Einfaltstellung des Scherengestells.

10. Faltgestell nach einem der vorangehenden Ansprüche mit einer Sicherungseinrichtung (18) für die Ausfaltstellung.

11. Faltgestell nach einem der vorangehenden Ansprüche, bei dem die Platte (15) als Boden eines im wesentlichen quaderförmigen Behälters (1), insbesondere eines Werkzeugkastens, ausgebildet ist.

12. Faltgestell nach Anspruch 11, bei dem der Behälter (1) einen Traggriff (12) aufweist, der sich senkrecht zur Scherenachse (7) erstreckt.

13. Faltgestell nach Anspruch 12, bei dem mit dem Traggriff (12) ein abklappbarer Schiebegriff (28) verbunden ist.

14. Faltgestell nach Anspruch 9, bei dem unterhalb der Platte (15) die Rasteinrichtung (17) derart angeordnet ist, daß sie sich beim Einfalten mit dem zweiten Scherenbein (6) verrastet.

15. Faltgestell nach Anspruch 4, bei dem die Leisten (2) Einschnitte (16) aufweist, durch die sich in der Einfaltstellung die Achse (7) des Scherengestells erstreckt.

*Fig. 1*

*Fig. 2*

Fig. 3

*Fig. 4*